Europäisches Patentamt

European Patent Office

Office européen des brevets

(19)

(11) Numéro de publication : **0 008 822**
**B1**

(12) **FASCICULE DE BREVET EUROPÉEN**

(45) Date de publication du fascicule du brevet :
07.04.82

(51) Int. Cl.³ : **B 60 C 25/06**

(21) Numéro de dépôt : 79200437.6

(22) Date de dépôt : 09.08.79

(54) **Dispositif pour fixer une roue sur un appareil à monter et à démonter les pneus.**

(30) Priorité : 01.09.78 BE 2057248

(43) Date de publication de la demande :
19.03.80 (Bulletin 80/06)

(45) Mention de la délivrance du brevet :
07.04.82 Bulletin 82/14

(84) Etats contractants désignés :
CH DE FR GB IT NL SE

(56) Documents cités :
FR - A - 711 944
FR - A - 2 347 217
GB - A - 549 932

(73) Titulaire : **Du Quesne, Francis**
**Cleistraat 138**
**B-2630 Aartselaar (BE)**

(72) Inventeur : **Du Quesne, Francis**
**Cleistraat 138**
**B-2630 Aartselaar (BE)**

(74) Mandataire : **Ottelohe, Jozef René**
**Bureau Ottelohe J.R. Postbus 3 Fruithoflaan 105**
**B-2600 Antwerpen (Berchem) (BE)**

Imprimerie Jouve, 18, rue St-Denis, 75001 Paris, France

Dispositif pour fixer une roue sur un appareil à monter et à démonter les pneus

L'invention se rapporte à un dispositif pour fixer une roue sur un plateau qui est entraîné en mouvement rotatif sous l'outillage d'un dispositif pour le montage et le démontage d'un pneu.

On connaît un dispositif qui dispose d'un mécanisme commun pour le déplacement des mâchoires et pour l'entraînement rotatif du plateau du dispositif. Ce dernier pourrait par exemple être pourvu à cet effet d'un axe vertical qui porte une roue conique, lequel engrène plusieurs pignons coniques, montés chacun sur un axe fileté sur lequel une mâchoire peut se déplacer axialement. On connaît également un dispositif qui comporte un arbre vertical qui porte un pignon droit, lequel engrène plusieurs pignons droits, montés chacun sur un axe parallèle à l'arbre précité et sur lequel se trouve fixé un bras avec une mâchoire. On connaît aussi un dispositif muni d'un axe vertical, d'une tête à plusieurs bras radiaux sur lesquels sont montés des mâchoires mobiles, d'une plaque pouvant tourner autour dudit axe vertical, d'une tringle à charnières entre ce plateau et chacune des mâchoires mobiles en vue du déplacement de celles-ci le long desdits bras radiaux et de la fixation de la roue, ainsi que d'un moyen pour déplacer angulairement ladite plaque (FR 2 347 217).

Tous ces dispositifs ont cependant l'inconvénient d'être de construction coûteuse. Un inconvénient supplémentaire résidant dans le fait que le montage des différentes pièces de tels dispositifs prend relativement beaucoup de temps.

En vue de remédier à ces inconvénients, le dispositif connu et décrit le dernier, est pourvu, suivant l'invention, d'un manchon fileté intérieurement et extérieurement et disposé entre l'arbre rotatif, la tête à plusieurs bras et la plaque tournante, manchon pouvant tourner et se déplacer en hauteur par rapport à ces éléments, à la suite de la rotation de l'arbre et provoquant ainsi le déplacement angulaire de la plaque par rapport à la tête, le déplacement des mâchoires et ensuite la rotation de la tête à plusieurs bras et mâchoires entre lesquels la roue est fixée.

A titre d'exemple, et sans le moindre caractère restrictif, il est donné ci-après une description plus détaillée d'une forme d'exécution préférée du dispositif conforme à l'invention. Cette description se réfère aux dessins annexés, dans lesquels :

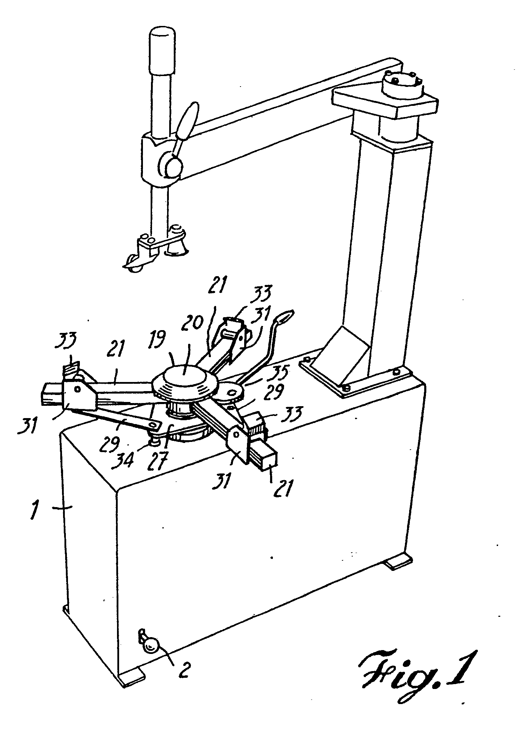

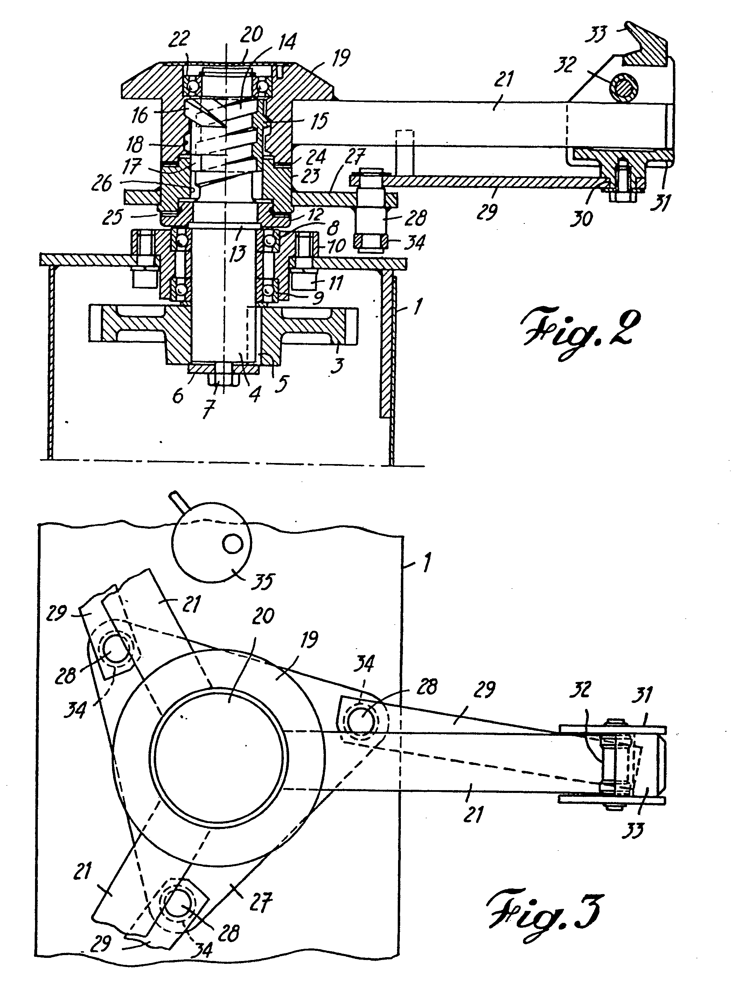

la figure 1 représente une vue en perspective de l'appareil pour le montage et le démontage de pneus, pourvu du dispositif conforme à l'invention ;

la figure 2 est une coupe longitudinale du dispositif conforme à l'invention ;

la figure 3 en représente une vue en plan.

Ce dispositif comporte une caisse 1 dans laquelle est logé un moteur électrique (non représenté) qui peut tourner dans les deux sens, suivant la position dans laquelle on pousse la pédale 2. Par l'entremise d'un réducteur (non représenté), le moteur entraîne une roue dentée 3 qui se trouve montée sur un arbre 4 par l'entremise d'une clavette 5, d'une rondelle 6 et d'un écrou 7. Cet arbre 4 qui peut être entraîné en rotation porte dans deux roulements à billes 8-9 aménagés dans une bride 10 solidaire de la caisse 1 au moyen de boulons 11. Sur ledit arbre 4 est glissée à serrage dur une bague 12 qui repose sur un épaulement 13 de l'arbre 4. La partie supérieure de l'arbre 4 est pourvue d'un filetage droit et trapézoïdal 14. Cette partie filetée est vissée dans un manchon 15 qui, à l'extérieur et près de son extrémité supérieure est pourvu d'un filetage gauche court et à forte inclinaison 16, à plusieurs entrées. Dans le bas ce manchon présente une partie 17 à section droite carrée. Le filetage 16 du manchon 15 s'adapte dans une partie intérieure filetée 18 de la tête 19, le tout étant recouvert d'une plaque de recouvrement amovible 20. Des bras radiaux 21 se trouvent soudés à la tête 19. Entre l'extrémité supérieure de l'arbre 4 et la tête 19 il est prévu un roulement à billes 22. Un collier 23 se trouve monté entre la tête 19 et la bague 12, alors qu'il est prévu entre ces éléments des disques de frottement respectivement 24 et 25. Ledit collier 23 comporte une ouverture carrée 26 dans laquelle s'adapte la partie carrée 17 du manchon 15, tout en pouvant s'y déplacer en hauteur. Ledit collier 23 se trouve soudé dans une plaque triangulaire 27, qui porte en ses angles des axes de pivotement 28. Sur chacun de ces axes de pivotement se trouve articulé une tringle 29, qui est reliée de manière articulée sur un pivot 30 d'un étrier 31 qui peut se déplacer le long du bras 21 avec lequel il coopère. Un galet de guidage 32 prévu dans chaque étrier 31 veille au bon guidage et au déplacement aisé de cet étrier sur le bras 21 correspondant. Chaque étrier 31 est porteur d'une mâchoire 33, entre laquelle la roue dont le pneu doit être monté ou démonté se trouve fixée par serrage. Au bas de chaque pivot 28 est monté un petit bloc d'arrêt cylindrique 34. Ces petits blocs d'arrêt coopèrent avec une butée 35 qui peut être amenée sur le parcours rotatif des petits blocs d'arrêt 34, afin d'empêcher la rotation de la plaque triangulaire 27.

Pour fixer une roue entre les mâchoires 33 du dispositif en vue d'y monter ou d'en démonter un pneu, on pose la roue sur les bras 21 et entre les mâchoires 33 et l'on enfonce la pédale 2. Ceci met en marche le moteur (non représenté) de manière à entraîner la roue dentée 3 et l'arbre 4 en rotation. Du fait que la roue qui repose sur les bras 21 maintient immobiles lesdits bras et la tête 19, l'arbre 4 et son filetage 14 entraînent le manchon 15 qui se met à tourner et descend dans la tête 19, de sorte que la partie carrée 17 du manchon 15, qui se trouve logée dans l'ouverture carrée 26 du collier 23, entraîne ce collier ainsi que la plaque 27 en une rotation et ce grâce au filetage gauche court et à forte pente 16 du manchon 15. Par ce fait il est exercé sur les tringles 29 une traction à la suite de laquelle les étriers 31 avec les mâchoires 33 sont déplacés le long des bras 21 en direction de la roue. Dès que les mâchoires saisissent la roue, la plaque 27 ne peut plus tourner de sorte que la manchon 15 se met à serrer la tête 19, le collier 23, la bague 12 et les disques de frottement 24-25 fermement les uns contre les autres, de manière que les mâchoires 33 se bloquent contre la roue et maintiennent celle-ci solidement serrée, après quoi la tête 19, les bras 21 avec mâchoires 33, la plaque 27 avec les tringles 29 et la roue fixée, se mettent à tourner sous les outils en vue du montage ou du démontage d'un pneu.

Pour dégager la roue, on bascule la butée 35 jusqu'à ce que celle-ci se place sur le parcours de rotation des petits blocs d'arrêt 34, de sorte que l'ensemble ne peut plus tourner, et on actionne la pédale 2 dans le sens qui fait tourner le moteur et l'arbre 4 dans le sens opposé à celui par lequel les mâchoires sont déplacées pour se rapprocher les unes des autres. De ce fait, tout en remontant, le manchon 15 se tourne dans le filetage 18 de la tête 19, ce qui élimine le serrage entre la tête 19, le collier 23, la bague 12 et les disques de frottement 24-25. Par ce mouvement de rotation du manchon 15, le collier 23 et la plaque 27 sont entraînés en rotation inverse, ce qui repousse les tringles 29 qui écartent les étriers 31 les uns des autres, d'où il résulte que les mâchoires 33 se dégagent de la roue.

Il est bien évident que la forme, les dimensions et la disposition relative des pièces décrites ci-dessus peuvent différer et être remplacées par d'autres ayant les mêmes fonctions, à condition de ne pas sortir du cadre de la présente invention.

**Revendications**

1. Dispositif pour la fixation d'une roue sur un appareil à monter et à démonter les pneus d'automobiles, ledit dispositif comportant un arbre central (4), une tête (19) à plusieurs bras (21) qui portent chacun une mâchoire (33) pouvant se déplacer, une plaque (27) pouvant tourner autour de l'arbre central (4) et entre cette plaque (27) et chacune des mâchoires mobiles (33) un moyen en vue du déplacement des mâchoires et de la fixation ou de la libération de la roue, caractérisé par le fait qu'entre l'arbre central rotatif (4), la tête (19) à plusieurs bras (21) et la plaque tournante (27), il est prévu un manchon (15) fileté intérieurement et extérieurement et coopérant avec ces éléments et pouvant tourner et se déplacer en hauteur par rapport à ces éléments, à la suite de la rotation de l'arbre (4) et provoquant ainsi le déplacement angulaire de la plaque (27) par rapport à la tête (19), le déplacement des mâchoires (33) et ensuite la rotation de la tête (19) à plusieurs bras (21) et mâchoires (33) entre lesquelles la roue est fixée.

2. Dispositif selon la revendication 1, caractérisé par le fait que l'arbre rotatif (4) est pourvu d'un filetage (14) et d'un épaulement (12), ledit filetage se vissant dans le manchon (15) qui est pourvu extérieurement à une extrémité d'un filetage (16) qui se visse dans une ouverture pourvue d'un filetage (18) de la tête (19) du dispositif, et comporte à l'autre extrémité une partie (17) à section droite polygonale qui peut se déplacer en hauteur dans une ouverture (26) de même section d'un collier (23) qui fait partie d'une plaque rotative (27) à laquelle se rattachent de manière pivotante des tringles (29), et où ledit collier se trouve logé entre la tête (19) précitée et l'épaulement (12) de l'arbre (4).

3. Dispositif selon la revendication 2, caractérisé par le fait que l'arbre (4) est pourvu d'un filetage droit (14) et que le manchon (15) est pourvu extérieurement d'un filetage gauche (16).

4. Dispositif selon la revendication 2, caractérisé par le fait que le filetage (16) sur l'extérieur du manchon (15) est à plusieurs entrées, à forte pente.

5. Dispositif selon la revendication 2, caractérisé par le fait qu'il est prévu entre la tête (19) et le collier (23) de la plaque rotative (27) d'une part, et entre ce collier (23) et la bague (12) de l'arbre (4) d'autre part, des disques de frottement (24-25).

6. Dispositif selon la revendication 1, caractérisé par le fait que les mâchoires qui se déplacent le long des bras (21), sont équipées d'un galet de guidage (32).

**Claims**

1. Device for fixing a wheel on an apparatus for mounting and removing automobile tyres, the aforesaid device comprising a central shaft (4), a head (19) with several arms (21) each carrying a movable jaw (33), a plate (27) rotatably mounted around the central shaft (4) and between this plate (27) and each of the movable jaws (33) a means for moving the jaws and for fixing and freeing the wheel, characterized in that between the rotative central shaft (4), the head (19) with several arms (21) and the rotating plate (27) there is provided a sleeve (15) which is threaded inside and outside and cooperates with these components and can rotate and move in height in relation to these components, following the rotation of the shaft (4) and thus causing the angular motion of the plate (27) in relation to the head (19), the motion of the jaws (33) and then the rotation of the head (19) with several arms (21) and jaws (33) between which the wheel is fixed.

2. Device according to claim 1, characterized in that the rotative shaft (4) is provided with a thread (14) and shoulder (12), the aforesaid thread being screwed in the sleeve (15) which is provided on the outside at one end with a thread (16) that is screwed in a hole with a thread (18) of the head (19) of the device, and comprises at the other end a part (17) with a polygonal cross-section which can be moved in height in a hole (26) having the same section of a collar (23) that is a part of a rotative plate (27) with which are pivotally connected rods (29), the aforesaid collar being mounted between the aforesaid head (19) and shoulder (12) of the shaft (4).

3. Device according to claim 2, characterized in that the shaft (4) is provided with a right-hand thread (14) and the sleeve (15) is externally provided with a left-hand thread (16).

4. Device according to claim 2, characterized in that the thread (16) on the outside of the sleeve (15) has many entries, with a rather steep slope.

5. Device according to claim 2, characterized in that, between the head (19) and collar (23) of the rotative plate (27), on the one hand, and between the collar (23) and shoulder (12) of the shaft (4), on the other hand, are provided friction plates (24-25).

6. Device according to claim 1, characterized in that the jaws that are being moved along the arms (21) are provided with a guiding roller (32).

**Ansprüche**

1. Vorrichtung für die Befestigung eines Kraftwagenrades auf einer Reifenmontier- und -demontiermaschine, bestehend aus einer Zentraldrehwelle (4), einem mehrarmigen Kopf (19) wovon jeder Arm (21) verschiebbare Klaue (33) trägt, einer um die Zentralwelle (4) drehbaren Drehscheibe (27) und einem zwischen dieser Scheibe (27) und jeder verschiebbaren Klaue (33) angeordneten Mittel für die Betätigung der Klauen und die Befestigung bzw. Lösung des Rades, dadurch gekennzeichnet, dass zwischen der Zentraldrehwelle (4), dem mehrarmigen Kopf (19) und der Drehscheibe (27) eine mit ihnen zusammenwirkende, Innen- und Aussengewinde aufweisende Hülse (15) angeordnet ist, welche drehbar und höhenverschiebbar in bezug auf die vorgenannten Teile unter dem Einfluss der Drehung der Welle (4) montiert ist und dadurch imstande ist die Drehung der Scheibe (27) in bezug auf den Kopf (19), die Bewegung der Klauen (33) und ferner die Drehung des mehrarmigen Kopfes (19) und Klauen zwischen dessen Klauen (33) das Rad befestigt ist, zu verursachen.

2. Vorrichtung gemäss dem Anspruch 1, dadurch gekennzeichnet, dass die Drehwelle (4) mit Aussengewinde (14) und einem Kragen (12) versehen ist, wobei dieses Aussengewinde in der Hülse (15) ist verschraubt welche einerseits mit Aussengewinde (16) zwecks Verschraubung in einer mit Innengewinde (18) versehenen Öffnung des Kopfes (19) der betreffenden Vorrichtung versehen ist, und anderseits einen Teil (17) vieleckigen Querschnittes aufweist, der höhenverschiebbar in einer entsprechend profilierten Öffnung (26) eines Kragens (23) einer Drehscheibe (27) ist, woran Stangen (29) schwenkbar gekuppelt sind, wobei dieser Kragen (23) zwischen dem vorgenannten Kopf (19) und dem vorgenannten Kragen (12) der Welle (4) angeordnet ist.

3. Vorrichtung gemäss dem Anspruch 2, dadurch gekennzeichnet, dass die Welle (4) Rechtsgewinde (14) und die Hülse (15) an der Aussenseite Linksgewinde (16) aufweist.

4. Vorrichtung gemäss dem Anspruch 2, dadurch gekennzeichnet, dass das Aussengewinde (16) der Hülse (15) ein mehrgängiges Gewinde mit hohem Neigungswinkel ist.

5. Vorrichtung gemäss dem Anspruch 2, dadurch gekennzeichnet, dass zwischen dem Kopf (19) und dem Kragen (23) der Drehscheibe (27) einerseits, und zwischen diesem Kragen (23) und dem Ring (12) der Welle (4), anderseits, Reibungsscheiben (24-25) angeordnet sind.

6. Vorrichtung gemäss dem Anspruch 1, dadurch gekennzeichnet, dass die verschiebbar auf den vorgenannten Armen (21) angeordneten Klauen mit einer Führungsrolle (32) ausgestattet sind.

*Fig.1*

Fig. 2

Fig. 3